# EUROPEAN PATENT SPECIFICATION

(11) **EP 2 403 804 B1**
(45) Date of publication and mention of the grant of the patent: **11.09.2013**
(21) Application number: 10709185.2
(22) Date of filing: 03.03.2010
(51) Int. Cl.: C01B 33/38, C01B 37/00, C01B 37/02, B01J 20/10, B01J 20/30, B01J 21/16, C01B 33/20, C01B 39/02, C01B 39/04

(54) **PROCESS FOR THE PREPARATION OF LAYERED SILICATES**
VERFAHREN ZUR HERSTELLUNG VON SCHICHTSILICATEN
PROCÉDÉ DE PRÉPARATION DE SILICATES STRATIFIÉS

(30) Priority: 03.03.2009 WO PCT/CN2009/070621
(43) Date of publication of application: 11.01.2012
(73) Proprietor: BASF SE, 67056 Ludwigshafen (DE); Tokyo Institute of Technology, Tokyo 152-8500 (JP)
(72) Inventor: YILMAZ, Bilge, New York NY 10014 (DE); MÜLLER, Ulrich, 67435 Neustadt (DE); PFAFF, Meike, 66539 Neunkirchen (DE); GIES, Hermann, 45549 Sprockhövel (DE); XIAO, Feng-Shou, Changchun 130023 (CN); TATSUMI, Takashi, Kawasaki 215-0021 (JP); DE VOS, Dirk, B-3220 Holsbeek (BE); BAO, Xinhe, Dalian 116011 (CN); ZHANG, Weiping, 116023 Dalian (CN)
(74) Representative: Altmann, Andreas
(86) International application number: PCT/EP2010/052716
(87) International publication number: WO 2010/100205

(56) References cited:
- EP-A2- 0 172 715
- US-A1- 2005 065 016
- US-A1- 2008 000 354
- US-B1- 6 756 030
- SONG J ET AL: "Zeolites synthesis in the system N(CH3)(C2H5)3F-SiO2-H2O" STUDIES IN SURFACE SCIENCE AND CATALYSIS, ELSEVIER BV, NL LNKD- DOI:10.1016/S0167-2991(04)80815-2, vol. 154, no. 1, 1 January 2004 (2004-01-01), pages 295-300, XP008126972 ISSN: 0167-2991 [retrieved on 2007-08-28]

## Description

The present invention relates to a process for the preparation of a layered silicate containing at least silicon and oxygen, comprising
(1) providing a mixture containing silica and/or at least one silica precursor, water, at least one tetraalkylammonium compound selected from the group consisting of diethyldimethylammonium compound, a triethylmethylammonium compound, and a mixture of a diethyldimethylammonium and a triethylmethylammonium compound, and at least one base, and optionally at least one suitable seeding material;
(2) heating the mixture obtained according to (1) under autogenous pressure (hydrothermal conditions) to a temperature in the range of from to 120 to 160°C for a period in the range of from 5 to 10 days to give a suspension containing the layered silicate,
   wherein the mixture obtained according to (1) contains SiO₂, and/or the silica precursor calculated as SiO₂, the at least one tetraalkylammonium compound, and water in the molar ratios SiO₂ : tetraalkylammonium compound : water of 1 : (0.3-0.7) : (9-15).

Further, the present invention relates to the layered silicates obtainable or obtained by the process or the processes of the present invention, and to specific silicates having novel structures. Also, the present invention relates to tectosilicates which can be prepared from the layered silicates. Moreover, the present invention relates to specific uses of either the layered silicates and/or the tectosilicates.

Layered silicates in general are known in the art. For example, materials such as those disclosed in J. Song, H. Gies; Studies in Surface Science and Catalysis, volume 15, 2004, pp.295-300 may be mentioned.

In various technical areas, such as, for example, catalysis or adsorption, there is a constant need for new materials, in particular silicates, and new processes, respectively, allowing for manufacturing tailor-made materials for specific catalytic or adsorption problems.

Therefore, it is an object of the present invention to provide a new process for the preparation of layered silicates which may be employed in, for example, above-mentioned areas as such or used as precursors for the preparation of tectosilicates. It is also an object of the present invention to provide new layered materials. Further, it is conceivable that the materials obtainable from the new process or the new layered materials may be used as starting materials for the preparation of pillared silicates.

Therefore, the present invention relates to a process for the preparation of a layered silicate containing at least silicon and oxygen, comprising
(1) providing a mixture containing silica and/or at least one silica precursor, water, at least one tetraalkylammonium compound selected from the group consisting of diethyldimethylammonium compounds, a triethylmethyl-ammonium compounds, and mixtures of diethyldimethylammonium and triethylmethylammonium compounds, and at least one base, and optionally at least one suitable seeding material;
(2) heating the mixture obtained according to (1) under autogenous pressure (hydrothermal conditions) to a temperature in the range of from to 120 to 160°C for a period in the range of from 5 to 10 days to give a suspension containing the layered silicate,
   wherein the mixture obtained according to (1) contains SiO₂, and/or the silica precursor calculated as SiO₂, the at least one tetraalkylammonium compound, and water in the molar ratios SiO₂ : tetraalkylammonium compound : water of 1 : (0.3-0.7) : (9-15).

According to the present invention, in addition to the at least one tetraalkylammonium compound, a base differing from this compound may be used. Examples of this base are ammonium hydroxide NH₄OH, alkali metal hydroxides or alkaline earth metal hydroxides, such as sodium hydroxide or potassium hydroxide, or mixtures of two or more of these compounds. In this case, the at least one tetraalkylammonium compound contains one or more suitable anions, for example halogen anions, such as fluoride or chloride or bromide or iodide.

Preferably, the at least one tetraalkylammonium compound contains the base used according to (1) as an anion. Examples of basic anions in this context include, inter alia, the hydroxide ion or aluminates. A particularly preferred basic anion is the hydroxide ion.

Therefore, the mixture provided in (1) preferably contains diethyldimethylammonium hydroxide, triethylmethylammonium hydroxide, or a mixture of diethyldimethylammonium hydroxide and triethylmethylammonium hydroxide.

Especially preferably, the mixture provided in (1) contains only one tetraalkylammonium compound, more preferably exactly one tetraalkylammonium hydroxide, and in particular diethyldimethylammonium hydroxide. Due to this preferred embodiment, it is also preferred that the mixture according to (1) is essentially free of usual anions other than hydroxide usually employed as counter-ions for tetraalkylammonium ions. Preferably, the mixture according to (1) is essentially free of halogen ions such as bromide or fluoride. The term "essentially free" as used in the context generally refers to respective contents of said mixture concerning said anions of not more than 500 ppm.

Any suitable compound can in principle be employed as silica or a silica precursor. The term "silica precursor" as used in this context refers to a compound which, under the chosen reaction conditions, allows for the formation of the silicate structure of the layered silicate. Tetraalkoxysilanes, such as tetramethoxysilane, tetraethoxysilane or tetrapropoxysilane, may be mentioned as precursor compound by way of example. In the process of the present invention, silica as such is particularly preferably employed. By way of example, such silica sources may be fumed, amorphous silica, silica sols such as Ludox or the like. It is also conceivable that a mixture of two or more silica sources or a mixture of two or more silica precursors or a mixture of at least one silica source and at least silica precursor is employed. Amorphous silica is especially preferred. Further, amorphous silica as the only silica source is preferred.

Therefore, the present invention also relates to the process as described above, wherein amorphous silica is employed according to (1).

Generally, it is in principle possible to employ any suitable amorphous silica. Amorphous silica having a specific surface (BET, Brunauer-Emmet-Teller; determined according to DIN 66131 by nitrogen adsorption at 77 K) in the range of from 10 to 400 m²/g, preferably in the range of from 10 to 100 m²/g, and particularly preferably in the range of from 10 to 50 m²/g is preferred. Further preferred ranges are from 50 to 100 m²/g or from 100 to 300 m²/g or from 300 to 400 m²/g_{.}

In the mixture according to (1), the molar ratios of silica, and/or silica precursor, calculated as SiO₂, tetraalkylammonium compound, and water may be chosen depending on the layered silicate which shall be obtained. Surprisingly, it was found that the specific hydrothermal conditions according to (2), namely the crystallization temperature in the range of from to 120 to 160°C and the crystallization period in the range of from 5 to 10 days allows for the preparation of new material, depending on the molar ratios of the said materials. Further, it was found that, if in addition to the molar ratios, the crystallization period is varied, new material are obtained for specific combinations of these parameters. Therefore, it is believed that the parameter combination of the crystallization temperature in the range of from to 120 to 160°C and the crystallization period in the range of from 5 to 10 days provides a flexible concept allowing for the synthesis of a number of new materials unknown in the art.

As far as the crystallization temperature is concerned, a temperature in the range of from 125 to 155 °C, more preferably from 130 to 150 °C, and even more preferably from 135 to 145°C are used. In particular, a temperature in the range of from 138 to 142 °C is concerned.

Other conceivable temperature ranges are, by way of example, 120 to 130°C or 130 to 140 °C or 140 to 150°C or 150 to 160 °C. According to the present invention, also two or more different temperatures may be used during the crystallization in (2). In this context, it is possible to adjust the temperature to a certain value in the above-mentioned ranges, maintaining this temperature for a certain period of time, and then to increase or decrease the temperature to another value within above-mentioned ranges. Contrary or in addition to this stepwise adjustment of the temperature, the crystallization temperature may be gradually decreased or increased during hydrothermal crystallization. In general, the applied heating rates, either as far as heating the mixture according to (1) the crystallization temperature and/or as far as heating the mixture during (2) is/are concerned, can be suitably chosen. Preferably, the heating rates are in the range of from 0.1 °C/min to 20 °C/min, preferably from 0.3 °C/min to 15 °C/min and in particular from 0.5 °C/min to 10 °C/min.

As far as above-mentioned molar ratios of silica and/or precursor thereof, tetraalkylammonium compound, and water are concerned, ranges are within 1 : (0.3-0.7) : (9-15), more preferably within 1 : (0.4-0.6) : (9-15), and even more preferably 1 : (0.45-0.55) : (9-15). Especially preferred are molar ratios of silica or precursor thereof : tetraalkylammonium compound of 1 : (0.48-0.52), in particular 1 : (0.49-0.51).

Therefore, the present invention relates to a process as described above, wherein the mixture obtained according to (1) contains SiO₂ and/or the silica precursor calculated as SiO₂, the at least one tetraalkylammonium compound and water in the molar ratios SiO₂ : tetraalkylammonium compound : water of 1 : (0.3-0.7) : (9-15), preferably of 1 : (0.4-0.6): (9-15), more preferably 1 : (0.45-0.55): (9-15).

Thus, in step (1), a mixture is provided which is subjected to hydrothermal crystallization in step (2). In general, it is possible to mix the individual starting materials in every conceivable order. Preferably, the silica or precursor thereof is admixed with an aqueous mixture containing the tetraalkylammonium compound. After addition of this structure directing agent, it is preferred to stir the resulting mixture, preferably for 0.1 to 10 h, more preferably from 0.5 to 5 h, and even more preferably from 1 to 2 h. The temperature during the preparation of the colloidal solution according to (1) is preferably in the range of from 10 to 40 °C, more preferably in the range of from 15 to 35 °C, and particularly preferably in the range of from 20 to 30 °C.

Depending on the desired molar ratios of the starting materials, it is possible to either suitably remove or add a suitable amount of water. Removal of water may be achieved, for example, by carefully heating the mixture or using a rotary evaporator. The water is removed preferably at a temperature in the range of from 60 to 85°C, more preferably of from 65 to 80°C, and particularly preferably of from 65 to 75 °C. If water is added or removed, it is preferred that the resulting mixture is stirred for 0.1 to 5 h, preferably from 0.5 to 2 h.

According to a further embodiment of the present invention, the mixture according to (1) additionally contains at least one source of at least one element suitable for isomorphous substitution of at least a portion of the Si atoms in the layered silicate which results from hydrothermal crystallization according to (2). Preferred suitable elements are selected from the group consisting of Al, B, Fe, Ti, Sn, Ga, Ge, Zr, V, Nb, and a mixture of two or more thereof. Due to the presence of the at least one source of the at least one suitable element, the silicate structure which is formed during hydrothermal crystallization contains not only Si atoms, but also, as isomorphous substitution of Si atoms, at least one of the suitable elements.

If, for example, aluminum is incorporated, it is possible to use, for example, metallic aluminum or suitable aluminates, such as alkali metal aluminates, and/or aluminum alcoholates, such as aluminum triisopropylate, in addition to the tetraalkylammonium compound and the silica and/or silica precursor as starting materials. If, for example, boron is incorporated, it is possible to use, for example, free boric acid and/or borates and/or boric esters, such as triethyl borate, in addition to the tetraalkylammonium compound and the silica and/or silica precursor as starting materials. If, for example, titanium is incorporated, it is possible to use, for example, titanium alcoholates, such as titanium ethanolates or titanium propylates, in addition to the tetraalkylammonium compounds and the silica and/or silica precursor as starting materials. If, for example, tin is incorporated, it is possible to use, for example, tin chlorides and/or organometallic tin compounds, such as tin alcoholates, or chelates, such as tin acetylacetonates, in addition to the tetraalkylammonium compound and the silica and/or silica precursor as starting materials. If, for example, zirconium is incorporated, it is possible to use, for example, zirconium chloride and/or zirconium alcoholates in addition to the tetraalkylammonium compound and the silica and/or silica precursor as starting materials. If, for example, vanadium or germanium or niobium is incorporated, it is possible to use, for example, vanadium chloride or germanium chloride or niobium chloride in addition to the tetraalkylammonium compound and the silica and/or silica precursor as starting materials.

According to a further embodiment of the present invention, at least one seeding material may be added to the mixture according to (1) as crystallization auxiliary. As seeding material, all compounds are conceivable resulting in the desired layered material. For the synthesis of a given layered silicate, it is preferred to add, as seed material, said layered silicate and/or the tectosilicate obtained from said layered silicate by a process as described hereinunder. It is especially preferred to add, as seed material, the layered silicate. Typical concentrations of the seeding materials are in the range of from 0.1 to 5% by weight of seeding material, based on the silica or silica precursor, calculated as silica, present in the mixture according to (1).

The resulting mixture is then subjected to hydrothermal crystallization in step (2). Preferably, the mixture is transferred to an autoclave. For adjusting the temperature of the crystallization to one or more desired temperatures, it is further preferred to use an autoclave which is equipped with heating and/or cooling means such as, e.g., internal and/or external heating and/or cooling means such as, e.g., a heating and/or cooling jacket. It is also possible to transfer the autoclave into an environment such as an oven, e.g. a circulating air oven, or the like which allows for maintaining a desired temperature in the synthesis mixture.

The synthesis mixture is preferably suitably stirred for the crystallization according to (2). It is also possible to rotate the reaction vessel in which the crystallization is carried out.

According to a first particularly preferred embodiment of the present invention, the mixture obtained according to (1) contains SiO₂ and/or the silica precursor calculated as SiO₂, the at least one tetraalkylammonium compound and water in the molar ratios SiO₂ : tetraalkylammonium compound : water of 1 : (0.45-0.55) : (9.5-10.5), more preferably of 1 : (0.47-0.53) : (9.7-10.3), even more preferably 1 : (0.49-0.51): (9.9-10.1).

Therefore, the present invention also relates to the process as described above, wherein the mixture obtained according to (1) contains SiO₂, or the silica precursor calculated as SiO₂, the at least one tetraalkylammonium compound and water in the molar ratios SiO₂ : tetraalkylammonium compound : water of 1 : (0.45-0.55) : (9.5-10.5). Further, the present invention relates to the silicate obtainable or obtained by this process.

As far as this first particularly preferred embodiment is concerned, it is further preferred to heat this mixture in step (2) for a period in the range of from 8.5 to 9.5 days, more preferably from 8.5 to 9.0 days and even more preferably from 8.6 to 8.8 days.

From these specific process conditions, a layered silicate is preferably obtainable or obtained which has an X-ray diffraction pattern comprising at least the following reflections:

| Diffraction angle 2 Theta/° [Cu K(alpha 1)] | Intensity (%) |
|---|---|
| (6.09 - 6.29) | (80.0 - 100.0) |
| (7.90 - 8.10) | (80.0 - 100.0) |
| (20.30 - 20.50) | (11.1 - 17.1) |
| (23.95 - 24.15) | (11.9 - 19.9) |
| (24.81 - 25.01) | (16.2 - 26.2) |
| (25.34 - 25.54) | (17.3 - 25.3) |
| (26.56 - 26.76) | (10.4 - 16.4) |

wherein 100% relates to the intensity of the maximum peak in the X-ray diffraction pattern.

Moreover, the present invention also relates to a layered silicate as such, which has an X-ray diffraction pattern comprising at least the following reflections:

| Diffraction angle 2 Theta/° [Cu K(alpha 1)] | Intensity (%) |
|---|---|
| (6.09 - 6.29) | (80.0 - 100.0) |
| (7.90 - 8.10) | (80.0 - 100.0) |
| (20.30 - 20.50) | (11.1 - 17.1) |
| (23.95 - 24.15) | (11.9 - 19.9) |
| (24.81 - 25.01) | (16.2 - 26.2) |
| (25.34 - 25.54) | (17.3 - 25.3) |
| (26.56 - 26.76) | (10.4 - 16.4) |

wherein 100% relates to the intensity of the maximum peak in the X-ray diffraction pattern.

As far as the first particularly preferred embodiment is concerned, it is also preferred to heat this mixture in step (2) for a period in the range of from 5.5 to 6.5 days, more preferably from 5.7 to 6.3 days and even more preferably from 5.9 to 6.1 days.

From these specific process conditions, a layered silicate is preferably obtainable or obtained which has an X-ray diffraction pattern comprising at least the following reflections:

| Diffraction angle 2 Theta/° [Cu K(alpha 1)] | Intensity (%) |
|---|---|
| (5.65 - 5.85) | 100 |
| (18.79 - 18.99) | (14.10 - 22.10) |
| (20.62 - 20.82) | (14.70 - 22.70) |
| (22.06 - 22.26) | (14.30 - 22.30) |
| (22.95 - 23.15) | (17.80 - 27.80) |
| (23.37 - 23.57) | (15.10 - 23.10) |
| (25.93 - 26.13) | (15.20 - 25.20) |
| (31.08 - 31.28) | (14.30 - 22.30) |

wherein 100% relates to the intensity of the maximum peak in the X-ray diffraction pattern.

Moreover, the present invention also relates to a layered silicate as such, which has an X-ray diffraction pattern comprising at least the following reflections:

| Diffraction angle 2 Theta/° [Cu K(alpha 1)] | Intensity (%) |
|---|---|
| (5.65 - 5.85) | 100 |
| (18.79 - 18.99) | (14.10 - 22.10) |
| (20.62 - 20.82) | (14.70 - 22.70) |
| (22.06 - 22.26) | (14.30 - 22.30) |
| (22.95 - 23.15) | (17.80 - 27.80) |
| (23.37 - 23.57) | (15.10 - 23.10) |
| (25.93 - 26.13) | (15.20 - 25.20) |
| (31.08 - 31.28) | (14.30 - 22.30) |

wherein 100% relates to the intensity of the maximum peak in the X-ray diffraction pattern.

As far as the first particularly preferred embodiment is concerned, it is further preferred to heat this mixture in step (2) for a period in the range of from 6.7 to 7.5 days, more preferably from 6.8 to 7.3 days and even more preferably from 6.9 to 7.1 days.

Therefore, the present invention also relates to a layered silicate obtainable or obtained by the process of the present invention, wherein the mixture obtained according to (1) contains SiO₂, and/or the silica precursor calculated as SiO₂, the at least one tetraalkylammonium compound and water in the molar ratios SiO₂ : tetraalkylammonium compound : water of 1 : (0.45-0.55) : (9.5-10.5), and wherein the mixture is heated according to (2) for a period in the range of from 6.7 to 7.5 days, preferably from 6.8 to 7.3 days and even more preferably from 6.9 to 7.1 days. Preferably, said layered silicate is obtained of obtainable from a process wherein the aqueous solution employed according to (1) contains diethyldimethylammonium hydroxide, triethylmethyl-ammonium hydroxide, or a mixture of diethyldimethylammonium hydroxide and triethylmethylammonium hydroxide, more preferably when said solution contains diethyldimethylammonium hydroxide. In a particularly preferred embodiment, the mixture is heated according to (2) to a temperature in the range of from 130 to 150 °C, preferably from 135 to 145 °C. Most preferably, the layered silicate is obtained or obtainable from a mixture according to (1) of amorphous silica, diethyldimethylammonium hydroxide and water in molar ratios of 1 : (0.49-0.51) : (9.9-10.1) which is heated according to (2) for a period in the range of 164 to 172 h at a temperature in the range of from 139 to 141 °C.

According to a second particularly preferred embodiment of the present invention, the mixture obtained according to (1) contains SiO₂ and/or the silica precursor calculated as SiO₂, the at least one tetraalkylammonium compound and water in the molar ratios SiO₂ : tetraalkylammonium compound : water of 1 : (0.45-0.55) : (12.0-13.0), more preferably of 1 : (0.47-0.53) : (12.3-12.9), even more preferably 1 : (0.49-0.51): (12.5-12.7).

Therefore, the present invention also relates to the process as described above, wherein the mixture obtained according to (1) contains SiO₂ and/or the silica precursor calculated as SiO₂, the at least one tetraalkylammonium compound and water in the molar ratios SiO₂: tetraalkylammonium compound : water of 1 : (0.45-0.55) : (12.0-13.0). Further, the present invention relates to the silicate obtainable or obtained by this process.

As far as this second particularly preferred embodiment is concerned, it is further preferred to heat this mixture in step (2) for a period in the range of from 7.5 to 8.5 days, more preferably from 7.7 to 8.3 days and even more preferably from 7.9 to 8.1 days.

From these specific process conditions, a layered silicate is preferably obtainable or obtained which has an X-ray diffraction pattern comprising at least the following reflections:

| Diffraction angle 2 Theta/° [Cu K(alpha 1)] | Intensity (%) |
|---|---|
| (6.02 - 6.22) | 100 |
| (18.80 - 19.00) | (7.0 - 11.0) |
| (19.47 - 19.67) | (6.0 - 10.0) |
| (22.74 - 22.94) | (10.4 - 16.4) |
| (23.74 - 23.94) | (7.2 - 11.2) |
| (26.45 - 26.65) | (6.3 - 10.3) |
| (31.05 - 31.25) | (8.7 - 14.7) |

wherein 100% relates to the intensity of the maximum peak in the X-ray diffraction pattern.

Moreover, the present invention also relates to a layered silicate as such, which has an X-ray diffraction pattern comprising at least the following reflections:

| Diffraction angle 2 Theta/° [Cu K(alpha 1)] | Intensity (%) |
|---|---|
| (6.02 - 6.22) | 100 |
| (18.80 - 19.00) | (7.0 - 11.0) |
| (19.47 - 19.67) | (6.0 - 10.0) |
| (22.74 - 22.94) | (10.4 - 16.4) |
| (23.74 - 23.94) | (7.2 - 11.2) |
| (26.45 - 26.65) | (6.3 - 10.3) |
| (31.05 - 31.25) | (8.7 - 14.7) |

wherein 100% relates to the intensity of the maximum peak in the X-ray diffraction pattern.

According to a preferred embodiment of the process of the present invention, the layered silicate contained in its mother liquor is separated off in a suitable manner in at least one step from the suspension obtained from (2). This separation can be effected, for example, by means of filtration, ultrafiltration, diafiltration or centrifuging methods or, for example, spray drying and spray granulation methods. Separation by means of spray drying or filtration is preferred.

Accordingly, the present invention also relates a process as described above, additionally comprising
(3) separating the silicate from the suspension obtained according to (2).

According to an embodiment of the process of the present invention, the crystallization according to (2) can be stopped by suitable quenching. Here, it is particularly preferred to add water to the suspension, said water being at a temperature which is suitable for stopping the crystallization.

According to a preferred embodiment of the process of the present invention, the at least one silicate separated off as described above is washed and/or dried.

Accordingly, the present invention also relates a process as described above, additionally comprising
(4) washing
   and/or
(5) drying of the silicate obtained according to (3).

The separation can be followed by at least one washing step and/or at least one drying step, wherein it is possible to use identical or different washing agents or washing agents mixtures in at least two washing steps and to use identical or different drying temperatures in at least two drying steps.

If at least one washing step is conducted, it is preferred to wash the separated silicate until the pH of the washwater is in the range of from 6 to 8, preferably from 6.5 to 7.5, as determined via a standard glass electrode.

The drying temperatures here are preferably in the range of from room temperature to 180 °C, more preferably of from 75 to 170 °C, more preferably of from 90 to 160 °C, and particularly preferably in the range of from 100 to 150 °C.

Accordingly, the present invention also relates a process as described above, additionally comprising
(3) separating the silicate from the suspension obtained according to (2), and further comprising
(4) washing, to a pH in the range of from 6.5 to 7.5, of the separated silicate, and
(5) drying, at a temperature in the range of from 100 to 150 °C, of the separated and optionally washed silicate.

Washing agents which may be used are, for example, water, alcohols, such as methanol, ethanol or propanol, or mixtures of two or more thereof. Examples of mixtures are mixtures of two or more alcohols, such as methanol and ethanol or methanol and propanol or ethanol and propanol or methanol and ethanol and propanol, or mixtures of water and at least one alcohol, such as water and methanol or water and ethanol or water and propanol or water and methanol and ethanol or water and methanol and propanol or water and ethanol and propanol or water and methanol and ethanol and propanol. Water or a mixture of water and at least one alcohol, preferably water and ethanol, is preferred, water being very particularly preferred as the only washing agent.

According to the process of the present invention, a silicate, in particular a layered silicate, wherein at least a portion of the Si atoms of the silicate structure is optionally isomorphously substituted, is obtained. The present invention accordingly also relates to a silicate, in particular a layered silicate, optionally an isomorphously substituted layered silicate, obtainable or obtained by the process as described above.

According to a further embodiment, the present invention also relates to a process as described above which additionally comprises suitable post-treating the separated and optionally washed and/or dried silicate, thereby isomorphously substituting at least a portion of the Si atoms in the calcined silicate with at least one suitable element. Preferred suitable elements are selected from the group consisting of Al, B, Fe, Ti, Sn, Ga, Ge, Zr, V, Nb, and mixtures of two or more thereof. Such post-treatment of the layered silicate can be carried out regardless whether or not the layered silicate is an already isomorphously substituted layered silicate.

According to a further embodiment of the process of the present invention, the layered silicate obtained according to (2) is calcined according to (6) in at least one additional step. It is in principle possible to subject the suspension comprising the layered silicate, i.e. the mother liquor containing the layered silicate, directly to calcination. Preferably, the silicate is separated off from the suspension, as described above according to (3), prior to the calcination. Prior to the calcination, the silicate separated off from the suspension can be subjected to at least one washing step (4) as described above and/or at least one drying step (5) as described above.

The calcination according to (6) of the silicate obtained according to (2) and/or (3) and/or (4) and/or (5) is preferably effected at a temperature in the range of up to 700°C to give a tectosilicate. More preferably, the calcination temperatures are in the range of from 300 to 700 °C, even more preferably of from 300 to 600 °C.

Thereby, according to a preferred embodiment of the process of the present invention, the heating of the layered silicate is carried out from room temperature to a temperature of up to 700 °C, the heating rate further preferably being in the range of from 0.1 to 12 °C/h, more preferably of from 1 to 11 °C/h, and particularly preferably in the range of from 5 to 10 °C/h.

According to a possible embodiment of the process of the present invention, the calcination is carried out stepwise at successive temperatures. The term "stepwise at successive temperatures" as used in the context of the present invention refers to a calcination in which the silicate to be calcined is heated to a certain temperature, is kept at this temperature for a certain time, and is heated from this temperature to at least one further temperature and is once again kept there for a certain time. If stepwise calcinations is carried out, the silicate to be calcined is preferably kept at up to 4, more preferably at up to 3, particularly preferably at 2 temperatures.

The calcination can be effected in any suitable atmosphere, for example air, lean air, nitrogen, steam, synthetic air or carbon dioxide. The calcination is preferably effected under air.

The calcination can be carried out in any apparatus suitable for this purpose. The calcination is preferably effected in a rotating tube, in a belt calciner, in a muffle furnace, or in situ in an apparatus in which the silicate is subsequently used for the intended purpose, for example as a molecular sieve or for another application described below. A rotating tube and a belt calciner are particularly preferred here.

According to the process of the present invention, a silicate, in particular a tectosilicate, is obtained.

Accordingly, the present invention also relates to a process as described above, additionally comprising
(6) calcining the silicate obtained according to (2) or (3) or (4) or (5), preferably at a temperature in the range of from 300 to 700 °C, more preferably 300 to 600 °C.

After calcination, according to a further embodiment, the present invention also relates to a process as described above which additionally comprises suitable post-treating the calcined silicate, thereby isomorphously substituting at least a portion of the Si atoms in the calcined silicate with at least one suitable element. Preferred suitable elements are selected from the group consisting of Al, B, Fe, Ti, Sn, Ga, Ge; Zr, V, Nb, and mixtures of two or more thereof. Such post-treatment of the calcined silicate can be carried out regardless whether or not the layered silicate, prior to calcinations, is an already isomorphously substituted layered silicate. Depending on the type of atoms which are incorporated into the lattice, a negatively charged framework which makes it possible, for example, to load the silicate with cations may form. Inter alia, the ammonium ions tetraakylammonium of the structure directing agents, platinum, palladium, rhodium or ruthenium cations, gold cations, alkali metal cations, for example sodium or potassium ions, or alkaline earth metal cations, for example magnesium or calcium ions, may be mentioned as such.

The present invention accordingly also relates to a silicate, in particular a tectosilicate, obtainable by the process described above, comprising the calcination according to (6), optionally with subsequent isomorphous substitution.

In many technical applications, the user often desires to employ the layered silicate and/or the tectosilicate which has been processed to moldings, instead of the silicate material as such. Such moldings are necessary in particular in many industrial processes, in order, for example, to be able to expediently operate separations of substances from mixtures in, for example, tube reactors.

The present invention accordingly also relates to a molding comprising the crystalline, microporous layered and/or tectosilicate described above. The present invention also comprises moldings comprising the layered silicate described above.

In general, the molding may comprise all conceivable further compounds in addition to the layered silicate and/or tectosilicate of the present invention, provided that it is ensured that the resulting molding is suitable for the desired application.

In the context of the present invention, it is preferred if at least one suitable binder material is used in the production of the molding. In the context of this preferred embodiment, more preferably a mixture of layered silicate and/or tectosilicate and the at least one binder is prepared. Suitable binders are in general all compounds which impart adhesion and/or cohesion between the particles of the tectosilicate which are to be bound, over and above the physisorption which may be present without a binder. Examples of such binders are metal oxides, such as SiO₂, Al₂O₃, TiO₂, ZrO₂ or MgO, or clays or mixtures of two or more of these compounds. As Al₂O₃ binders, clay minerals and naturally occurring or synthetic aluminas, for example alpha-, beta-, gamma-, delta-, eta-, kappa-, chi- or theta-alumina and the inorganic or organometallic precursor compounds thereof, such as gibbsite, bayerite, boehmite, pseudoboehmite or trialkoxyaluminates, such as aluminum triisopropylate are preferred in particular. Further preferred binders are amphiphilic compounds having a polar and a nonpolar moiety, and graphite. Further binders are, for example, clays, such as montmorillonites, kaolins, bentonites, halloysites, dickites, nacrites, or anaxites. These binders can be used as such. In the context of the present invention, it is also possible to use compounds from which the binder is formed in at least one further step in the production of the moldings. Examples of such binder precursors are tetraalkoxysilanes, tetraalkoxytitanates, tetraalkoxyzirconates or a mixture of two or more different tetraalkoxysilanes or a mixture of two or more different tetraalkoxytitanates or a mixture of two or more different tetraalkoxyzirconates or a mixture of at least one tetraalkoxysilane and at least one tetraalkoxytitanate or of at least one tetraalkoxysilane and at least one tetraalkoxyzirconate or of at least one tetraalkoxytitanate and at least one tetraalkoxyzirconate or a mixture of at least one tetraalkoxysilane and at least one tetraalkoxytitanate and at least one tetraalkoxyzirconate. In the context of the present invention, binders which either completely or partly consist of SiO₂ or are a precursor of SiO₂, from which SiO₂ is formed in at least one further step in the production of the moldings are to be mentioned. In this context, both colloidal silica and "wet process" silica as well as "dry process" silica can be used. These are very particularly preferably amorphous silica, the size of the silica particles being, for example, in the range of from 5 to 100 nm and the surface of the silica particles being in the range of from 50 to 500 m²/g. Colloidal silica, preferably in the form of an alkaline and/or ammoniacal solution, more preferably in the form of an ammoniacal solution, is, for example, commercially available as, inter alia, Ludox®, Syton®, Naico® or Snowtex®. "Wet process" silica is, for example, commercially available, inter alia, as Hi-Sil®, Ultrasil®, Vulcasil®, Santocel®, Valron-Estersil®, Tokusil® or Nipsil®. "Dry process" silica is, for example, commercially available, inter alia, as Aerosil®, Reolosil®, Cab-O-Sil®, Fransil® or ArcSilica®. The binders are preferably used in an amount which leads to the finally resulting moldings whose binder content is up to 80 % by weight, more preferably in the range of from 5 to 80 % by weight, more preferably in the range of from 10 to 70 % by weight, more preferably in the range of from 10 to 60 % by weight, more preferably in the range of from 15 to 50 % by weight, more preferably in the range of from 15 to 45 % by weight, particularly preferably in the range of from 15 to 40 % by weight, based in each case on the total weight of the finally resulting molding. The term "finally resulting molding" as used in the context of the present invention relates to a molding as obtained from the drying and calcining steps (IV) and/or (V), as described below, particularly preferably obtained from (V).

The mixture of binder or precursor of a binder and a zeolitic material can be mixed with at least one further compound for further processing and for the formation of a plastic material. Here, inter alia, pore formers may preferably be mentioned. In the process of the present invention, all compounds which, with regard to the finished molding, provide a certain pore size and/or a certain pore size distribution and/or certain pore volumes can be used as pore formers. Preferably used pore formers in the process of the present invention are polymers which are dispersible, suspendable or emulsifiable in water or in aqueous solvent mixtures. Preferred polymers here are polymeric vinyl compounds, for example polyalkylene oxides, such as polyethylene oxides, polystyrene, polyacrylates, polymethacrylates, polyolefins, polyamides and polyesters, carbohydrates, such as cellulose or cellulose derivatives, for example methylcellulose, or sugars or natural fibers. Further suitable pore formers are, for example, pulp or graphite. If pore formers are used in the preparation of the mixture according to (I), the pore former content, preferably the polymer content of the mixture according to (I) is preferably in the range of from 5 to 90 % by weight, preferably in the range of from 15 to 75 % by weight, and particularly preferably in the range of from 25 to 55 % by weight, based in each case on the amount of novel tectosilicate in the mixture according to. (I). If desired for the pore size distribution to be achieved, a mixture of two or more pore formers may also be used. In a particularly preferred embodiment of the process of the present invention, as described below, the pore formers are removed in a step (V) by calcination to give the porous molding.

In the context of a likewise preferred embodiment of the present invention, at least one pasting agent is added in the preparation of the mixture according to (I). Pasting agents which may be used are all compounds suitable for this purpose. These are preferably organic, in particular hydrophilic polymers, for example cellulose, cellulose derivatives, such as methylcellulose, starch, such as potato starch, wallpaper paste, polyacrylates, polymethacrylates, polyvinyl alcohol, polyvinylpyrrolidone, polyisobutene or polytetrahydrofuran. Accordingly, particular compounds which also act as pore formers can be used as pasting agents. In a particularly preferred embodiment of the process of the present invention as described below, these pasting agents are removed in a step (V) by calcination to give the porous molding.

According to a further embodiment of the present invention, at least one acidic additive may added during the preparation of the mixture according to (I). Organic acidic compounds which can be removed in the preferred step (V), as described below, by calcination are very particularly preferred. Carboxylic acids, for example formic acid, oxalic acid and/or citric acid, are particularly preferred. It is also possible to use two or more of these acidic compounds.

The order of addition of the components of the mixture according to (I) which contains the layered silicate and/or the tectosilicate is not critical. It is both possible first to add the at least one binder, then the at least one pore former and the at least one acidic compound and finally the at least one pasting agent and to interchange the sequence with regard to the at least one binder, the at least one pore former, the at least one acidic compound and the at least one pasting agent.

After the addition of the binder to the layered silicate and/or the tectosilicate solid, to which, if appropriate, at least one of the compounds described above have already been added, the mixture according to (I) is, as a rule, homogenized for from 10 to 180 minutes. Inter alia, kneaders, edge mills or extruders are particularly preferably used for the homogenization. The mixture is preferably kneaded. On the industrial scale, treatment in an edge mill is preferably employed for the homogenization. The homogenization is carried out as a rule at temperatures in the range of from about 10 °C to the boiling point of the pasting agent and normal pressure or slightly superatmospheric pressure. Thereafter, if appropriate, at least one of the compounds described above can be added. The mixture thus obtained is homogenized, preferably kneaded, until an extrudable plastic material has formed.

According to a more preferred embodiment of the invention, the homogenized mixture is molded. In the context of the present invention, those processes in which the molding is effected by extrusion in conventional extruders, for example to give extrudates having a diameter of preferably from 1 to 10 mm, particularly preferably from 2 to 5 mm, are preferred for the shaping processes. Such extrusion apparatuses are described, for example, in Ullmann's Enzyklopädie der Technischen Chemie, 4th Edition, Vol. 2, page 295 et seq., 1972. In addition to the use of a screw-type extruder, a plunger-type extruder is also preferably used for the molding. In principle, however, all known and/or suitable kneading and molding apparatuses and processes may be used for the shaping. Examples of these are inter alia: briquetting, i.e. mechanical compression with or without addition of additional binder material; pelleting, i.e. compacting by circular and/or rotational movements; sintering, i.e. the material to be molded is subjected to a thermal treatment. The shape of the moldings produced according to the invention can be chosen as desired. In particular, inter alia spheres, oval shapes, cylinders or tablets are possible.

In the context of the present invention, step (III) is preferably followed by at least one drying step.

In the context of the present invention, the step (IV) is preferably followed by at least one calcination step. The calcination is carried out at temperatures in the range of, in general, from 300 to 700 °C, preferably from 300 to 600 °C. The calcination can be effected under any suitable gas atmosphere, air and/or lean air being preferred. Furthermore, the calcination is preferably carried out in a muffle furnace, a rotary kiln and/or a belt calcination oven. It is possible for the temperatures during a calcination step to remain constant or to be changed continuously or discontinuously. If calcination is effected twice or more often, the calcination temperatures can be different or identical in the individual steps.

Accordingly, the present invention also relates to a process for the production of a molding as described above, comprising the steps
(I) preparing of a mixture containing the layered silicate and/or the tectosilicate as described above or the layered silicate and/or the tectosilicate obtainable or obtained by a process as described above, and optionally at least one binder;
(II) kneading of the mixture;
(III) molding of the kneaded mixture to give at least one molding;
(IV) drying of the at least one molding;
(V) calcining of the at least one dried molding.

Before and/or after the drying and/or before and/or after the calcination, the at least one molding can, if appropriate, be treated with a concentrated or dilute Broenstedt acid or a mixture of two or more Broenstedt acids. Suitable acids are, for example, hydrochloric acid, sulfuric acid, phosphoric acid, nitric acid or carboxylic acids, dicarboxylic acids or oligo- or polycarboxylic acids, such as nitrilotriacetic acid, sulfosalicylic acid or ethylenediaminetetraacetic acid. If appropriate, this at least one treatment with at least one Broenstedt acid is followed by at least one drying step and/or at least one calcination step, which in each case is carried out under the conditions described above.

According to a further embodiment of the process of the present invention, the moldings obtained according to the invention can, for better hardening, be subjected to a water steam treatment, after which preferably drying is effected at least once again and/or calcination is effected at least once again. For example, after at least one drying step and at least one subsequent calcination step, the calcined molding is subjected to the steam treatment and is then dried at least once again and/or calcined at least once again.

The present invention moreover relates to the use of the silicates of the invention, in particular of the novel tectosilicates, and/or of the moldings of the invention, as a molecular sieve, catalyst, catalyst support or binder thereof, as adsorbents, pigments, additives in detergents, an additive for building materials, for imparting thixotropic properties to coating pastes and finishes, and applications as external and internal lubricant, as flameproofing agent, auxiliary agent and filler in paper products, in bactericidal and/or fungicidal and/or herbicidal compositions, for ion exchange, for the production of ceramics, in polymers, in electrical, optical or electrooptical components and switching elements or sensors.

Preferably, the layered silicate of the present invention, and/or the layered silicates obtainable or obtained by a process of the present invention, and/or the tectosilicate of the present invention may be used as a catalyst, a catalyst support or binder thereof, an adsorbent, for ion exchange, for the production of ceramics, or in polymers.

Further, the layered silicates according to the present invention may be used as starting materials for the manufacturing of pillard silicates.

The present invention is explained in more detail with reference to the examples, figures and tables described below.

### Description of the Figures

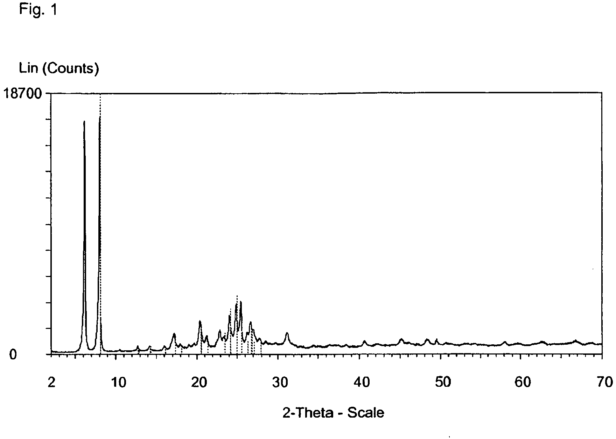

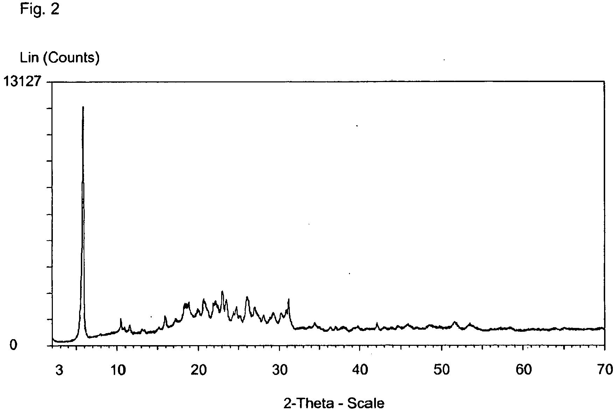

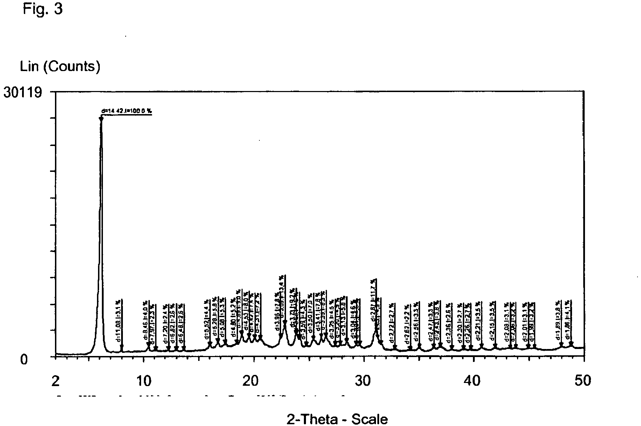

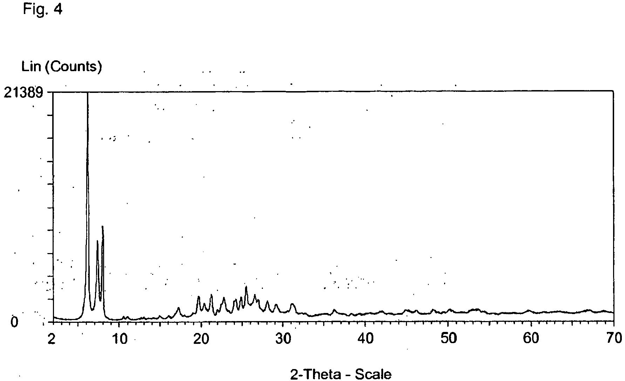

- Figures 1 to 4: show the X-ray diffraction pattern of the dried layered silicate obtained according to Examples 1 to 4, respectively. Figure 1 further includes the line pattern of the RUB-36 structure for comparison. The powder X-ray diffraction patterns were recorded on a Siemens D-5000 with monochromatic Cu K alpha-1 radiation, a capillary sample holder being used in order to avoid a preferred orientation. The diffraction data were collected using a position-sensitive detector from Braun, in the range from 8 to 96 ° (2 theta) and with a step width of 0.0678°. Indexing of the powder diagram was effected using the program Treor90, implemented in powder-X (Treor90 is a public domain program which is freely accessible via the URL http://www.ch.iucr.org/sincris-top/logiciel/). In the figure, the angle 2 theta in ° is shown along the abscissa and the intensities are plotted along the ordinate.

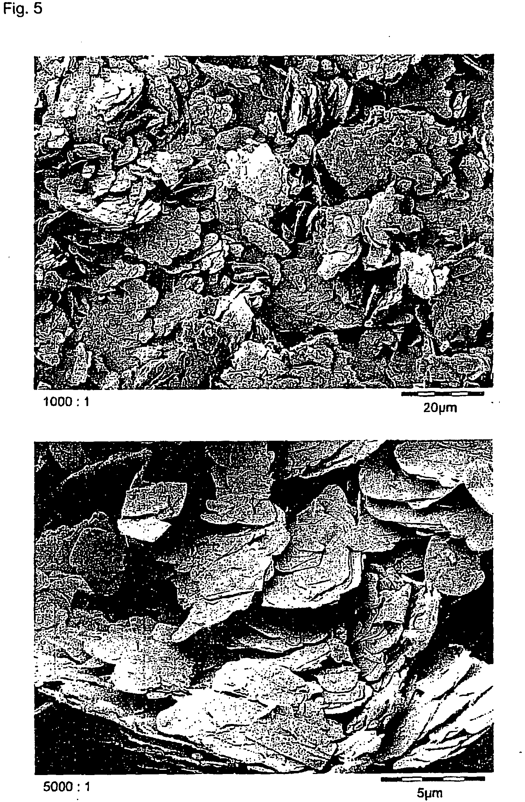

- Figure 5: shows respective scanning electron microscopy (SEM) images of the dried layered silicate obtained according to Example 4.

### Examples:

### Example 1: Preparation of a layered silicate

1139.7 g of aqueous diethyldimethylammonium hydroxide (20.62 wt.-%) solution were weighed into a beaker, to which 238.9 g of amorphous silica (Aerosil®) were added in portions and the mixture was stirred for 2 h, affording a yellowish suspension.

188.6 g of water were then removed from the resulting mixture using a rotary evaporator, and the concentrated mixture was stirred for 1 h. 172.5 g of the mixture were then weighed into a pressure digestion vessel and then heated therein under hydrothermal conditions at 140 °C for 208 h.

The resulting silvery-white shimmering suspension was then separated by centrifugation, washed with distillated water to pH 7, and dried at 120 °C for 24 h, thus affording 31.8 g of a white powder.

The synthesis product had the reflections shown in Table 1 in the X-ray diffraction pattern (Cu K alpha 1).

**Table 1: X-ray diffraction pattern of the novel layered silicate**

| Diffraction angle 2 Theta/° [Cu K(alpha 1)] | | Intensity (%) |
|---|---|---|
| | 6.19 | 98.5 |
| | 8.00 | 100.0 |
| | 10.47 | 1.7 |
| | 12.34 | 1.5 |
| | 12.69 | 3.1 |
| | 14.18 | 3.0 |
| | 16.00 | 3.2 |
| | 17.18 | 8.1 |
| | 17.95 | 4.0 |
| | 18.98 | 3.8 |
| | 19.62 | 4.4 |
| | 20.40 | 14.1 |
| | 21.22 | 7.4 |
| | 22.53 | 5.6 |
| | 22.88 | 10.2 |
| | 23.36 | 7.2 |
| | 24.05 | 15.9 |
| | 24.91 | 21.2 |
| | 25.44 | 22.3 |
| | 26.23 | 9.1 |
| | 26.66 | 13.4 |
| | 26.98 | 10.3 |
| | 27.76 | 6.4 |
| | 28.56 | 5.3 |
| | 29.75 | 4.6 |
| | 31.15 | 8.8 |
| | 32.93 | 2.9 |
| | 34.47 | 3.3 |
| | 35.22 | 3.0 |
| | 36.45 | 3.6 |
| | 37.13 | 3.7 |
| | 38.39 | 3.6 |
| | 40.60 | 5.2 |
| | 42.18 | 3.8 |
| | 44.20 | 3.6 |
| | 45.17 | 5.9 |
| | 46.10 | 4.6 |
| 46.53 | | 4.0 |
| 47.14 | | 3.9 |
| 48.39 | | 5.7 |
| 49.57 | | 5.9 |
| 50.75 | | 4.4 |

### Example 2: Preparation of a layered silicate

976.9 g of aqueous diethyldimethylammonium hydroxide (20.62 wt.-%) solution were weighed into a beaker, to which 204.7 g of amorphous silica (Aerosil®) were added in portions and the mixture was stirred for 1 h, thus affording a yellowish suspension.

161.6 g of water were then removed from the resulting mixture using a rotary evaporator, and the concentrated mixture was stirred for 30 min. 121.5 g of the resulting mixture were then weighed into a pressure digestion vessel and then heated therein under hydrothermal conditions at 140 °C for 144 h, thus affording a pasty white solid.

The resulting white suspension was then placed in a porcelain bowl and dried at 120 °C for 24 h, thus affording 35.8 g of a light yellow powder.

The synthesis product had the reflections shown in Table 2 in the X-ray diffraction pattern (Cu K alpha 1).

**Table 2: X-ray diffraction pattern of the novel layered silicate**

| Diffraction angle 2 Theta/° [Cu K(alpha 1)] | Intensity (%) |
|---|---|
| 5.75 | 100.00 |
| 7.95 | 4.80 |
| 10.48 | 10.70 |
| 10.85 | 7.50 |
| 11.53 | 8.10 |
| 13.05 | 6.80 |
| 13.30 | 6.50 |
| 15.17 | 7.40 |
| 15.87 | 12.10 |
| 17.17 | 11.00 |
| 18.33 | 17.40 |
| 18.57 | 17.00 |
| 18.89 | 18.10 |
| 19.97 | 15.30 |
| 20.72 | 18.70 |
| 21.16 | 15.10 |
| 21.85 | 17.50 |
| 22.16 | 18.30 |
| 22.40 | 16.30 |
| 23.05 | 22.80 |
| 23.47 | 19.10 |
| 24.43 | 14.00 |
| 24.71 | 16.00 |
| 25.16 | 12.20 |
| 26.03 | 20.20 |
| 26.94 | 15.60 |
| 27.37 | 12.70 |
| 27.99 | 12.70 |
| 28.87 | 11.20 |
| 29.25 | 13.40 |
| 30.31 | 13.30 |
| 30.87 | 14.40 |
| 31.18 | 18.30 |
| 33.75 | 7.60 |
| 34.43 | 9.20 |
| 36.34 | 7.30 |
| 37.00 | 7.60 |
| 37.93 | 7.50 |
| 39.24 | 7.10 |
| 39.72 | 7.80 |
| 40.88 | 6.90 |
| 42.07 | 8.60 |
| 43.03 | 7.30 |
| 44.64 | 7.70 |
| 45.83 | 8.50 |
| 48.60 | 8.10 |

### Example 3: Preparation of a layered silicate

1628.2 g of aqueous diethyldimethylammonium hydroxide (20.62 wt.-%) solution were weighed into a beaker, to which 341.2 g of amorphous silica (Aerosil®) were added in portions and the mixture was stirred for 2 h, thus affording a yellowish suspension.

The resulting mixture was placed into a pressure digestion vessel, was let stand for 24 h, and then subsequently heated under hydrothermal conditions at 140 °C for 192 h. The resulting silvery-white shimmering suspension displayed a pH of 12.57.

The solid reaction product was then separated by suction filtration, first washed with the filtrate and then with 9 liters of distillated water to 105 µS/cm with respect to the conductivity of the washing solution. The product was then dried at 120 °C for 24 h, thus affording 205.0 g of a white powder.

The synthesis product had the reflections shown in Table 3 in the X-ray diffraction pattern (Cu K alpha 1).

**Table 3: X-ray diffraction pattern of the novel layered silicate**

| Diffraction angle 2 Theta /° [Cu K(alpha 1)] | Intensity (%) |
|---|---|
| 6.12 | 100.0 |
| 7.97 | 3.1 |
| 10.44 | 4.0 |
| 11.09 | 2.3 |
| 12.28 | 2.4 |
| 12.97 | 2.6 |
| 13.65 | 2.6 |
| 16.04 | 4.4 |
| 16.78 | 5.8 |
| 17.43 | 5.3 |
| 18.46 | 5.2 |
| 18.90 | 9.0 |
| 19.57 | 8.0 |
| 20.09 | 7.4 |
| 20.61 | 7.2 |
| 22.44 | 7.8 |
| 22.84 | 13.4 |
| 23.84 | 9.2 |
| 24.15 | 7.6 |
| 24.76 | 4.3 |
| 25.39 | 7.0 |
| 26.10 | 7.8 |
| 26.55 | 8.3 |
| 27.39 | 4.5 |
| 27.87 | 4.9 |
| 28.48 | 5.8 |
| 29.32 | 4.6 |
| 29.64 | 4.6 |
| 31.15 | 11.7 |
| 31.58 | 4.9 |
| 32.85 | 2.7 |
| 34.24 | 2.2 |
| 35.07 | 3.3 |
| 36.38 | 3.3 |
| 36.97 | 3.8 |
| 38.06 | 2.6 |
| 39.12 | 2.7 |
| 39.77 | 2.7 |
| 40.73 | 3.5 |
| 42.00 | 3.5 |
| 43.38 | 3.1 |
| 43.89 | 3.2 |
| 45.00 | 3.1 |
| 45.57 | 3.2 |
| 48.02 | 3.8 |
| 48.90 | 4.1 |

### Example 4: Preparation of a layered silicate

651.6 g of aqueous diethyldimethylammonium hydroxide (20.62 wt.-%) solution were weighed into a beaker, to which 136.5 g of amorphous silica (Aerosil®) were added in portions and the mixture was stirred for 1 h, affording a yellowish suspension.

107.8 g of water were then removed from the suspension using a rotary evaporator, and the concentrated mixture was stirred for 30 min, thus affording a suspension with a pH of 15.14.

171.4 g of the resulting mixture were then weighed into a pressure digestion vessel and then heated therein under hydrothermal conditions at 140 °C for 168 h, thus affording a pasty solid in a solution with a pH of 14.45.

The solid reaction product was then separated by suction filtration, and washed with 2.5 liters of distillated water to 45.4 µS/cm with respect to the conductivity of the washing solution. The product was then dried at 120 °C for 24 h, thus affording 24.9 g of a white powder.

## Claims

1. A process for the preparation of a layered silicate containing at least silicon and oxygen, comprising
(1) providing a mixture containing silica and/or at least one silica precursor, water, at least one tetraalkylammonium compound selected from the group consisting of diethyldimethylammonium compounds, triethylmethylammonium compounds, and mixtures of diethyldimethylammonium and triethylmethylammonium compounds, and at least one base, and optionally at least one suitable seeding material;
(2) heating the mixture obtained according to (1) under autogenous pressure to a temperature in the range of from to 120 to 160 °C for a period in the range of from 5 to 10 days to give a suspension containing the layered silicate,
wherein the mixture obtained according to (1) contains SiO₂, and/or the silica precursor calculated as SiO₂, the at least one tetraalkylammonium compound, and water in the molar ratios SiO₂ : tetraalkylammonium compound : water of 1 : (0.3-0.7): (9-15).

2. The process of claim 1, wherein the aqueous solution employed according to (1) contains diethyldimethylammonium hydroxide, triethylmethyl-ammonium hydroxide, or a mixture of diethyldimethylammonium hydroxide and triethylmethylammonium hydroxide, preferably diethyldimethyl-ammonium hydroxide.

3. The process of claim 1 or 2, wherein the mixture obtained according to (1) contains SiO₂, and/or the silica precursor calculated, as SiO₂, the at least one tetraalkylammonium compound, and water in the molar ratios SiO₂ : tetraalkylammonium compound : water of 1 : (0.4-0.6) : (9-15), more preferably 1 : (0.45-0.55): (9-15).

4. The process of any of claims 1 to 3, wherein the mixture obtained according to (1) contains SiO₂ and/or the silica precursor calculated as SiO₂, the at least one tetraalkylammonium compound and water in the molar ratios SiO₂ : tetraalkylammonium compound : water of 1 : (0.45-0.55) : (9.5-10.5).

5. The process of claim 4, wherein the mixture is heated according to (2) for a period in the range of from 8.5 to 9.5 days.

6. The process of claim 4, wherein the mixture is heated according to (2) for a period in the range of from 5.5 to 6.5 days.

7. The process of claim 4, wherein the mixture is heated according to (2) for a period in the range of from 6.7 to 7.5 days.

8. The process of any of claims 1 to 3, wherein the mixture obtained according to (1) contains SiO₂ and/or the silica precursor calculated as SiO₂, the at least one tetraalkylammonium compound and water in the molar ratios SiO₂ : tetraalkylammonium compound: water of 1 : (0.45-0.55) : (12.0-13.0).

9. The process of claim 8, wherein the mixture is heated according to (2) for a period in the range of from 7.5 to 8.5 days.

10. The process of any of claims 1 to 9, wherein the mixture is heated according to (2) to a temperature in the range of from 130 to 150 °C, preferably from 135 to 145 °C.

11. The process of any of claims 1 to 10, wherein amorphous silica is employed according to (1).

12. The process of any of claims 1 to 11, wherein the mixture according to (1) additionally contains at least one source of at least one element suitable for isomorphous substitution of at least a portion of the Si atoms in the layered silicate, said element preferably being selected from the group consisting of Al, B, Fe, Ti, Sn, Ga, Ge, Zr, V, and Nb.

13. The process of any of claims 1 to 12, additionally comprising
(3) separating the silicate from the suspension obtained according to (2), and optionally further comprising
(4) washing, preferably to a pH in the range of from 6.5 to 7.5, of the separated silicate, and/or
(5) drying, preferably at a temperature in the range of from 100 to 150 °C, of the separated and optionally washed silicate.

14. The process of claim 13, additionally comprising post-treating the separated and optionally washed and/or dried silicate, thereby isomorphously substituting at least a portion of the Si atoms in the layered silicate with at least one suitable element, said element preferably being selected from the group consisting of Al, B, Fe, Ti, Sn, Ga, Ge, Zr, V, and Nb.

15. The process of any of claims 1 to 14, additionally comprising
(6) calcining the silicate obtained according to (2) or (3) or (4) or (5), preferably at a temperature in the range of from 300 to 700 °C, more preferably 300 to 600 °C.

16. The process of claim 15, additionally comprising post-treating the calcined silicate, thereby isomorphously substituting Si in the calcined silicate with at least one suitable element, said element preferably being selected from the group consisting of Al, B, Fe, Ti, Sn, Ga, Ge, Zr, V, and Nb.

17. A layered silicate obtainable by a process according to any of claims 1 to 14.

18. A layered silicate having an X-ray diffraction pattern comprising at least the following reflections:
| Diffraction angle 2 Theta /° [Cu K(alpha 1)] | Intensity (%) |
|---|---|
| (6.09 - 6.29) | (80.0 - 100.0) |
| (7.90 - 8.10) | (80.0 - 100.0) |
| (20.30 - 20.50) | (11.1 - 17.1) |
| (23.95 - 24.15) | (11.9 - 19.9) |
| (24.81 - 25.01) | (16.2 - 26.2) |
| (25.34 - 25.54) | (17.3 - 25.3) |
| (26.56 - 26.76) | (10.4 - 16.4) |
wherein 100% relates to the intensity of the maximum peak in the X-ray diffraction pattern.

19. A layered silicate having an X-ray diffraction pattern comprising at least the following reflections:
| Diffraction angle 2 Theta /° [Cu K(alpha 1)] | Intensity (%) |
|---|---|
| (5.65 - 5.85) | 100 |
| (18.79 - 18_{.}99) | (14.10 - 22.10) |
| (20.62 - 20.82) | (14.70 - 22.70) |
| (22.06 - 22.26) | (14.30 - 22.30) |
| (22.95 - 23.15) | (17.80 - 27.80) |
| (23.37 - 23.57) (25.93 - 26.13) | (15.20 - 25.20) |
| (31.08 - 31.28) | (14.30 - 22.30) |
wherein 100% relates to the intensity of the maximum peak in the X-ray diffraction pattern.

20. A layered silicate having an X-ray diffraction pattern comprising at least the following reflections:
| Diffraction angle 2 Theta /° [Cu K(alpha 1)] | Intensity (%) |
|---|---|
| (6.02 - 6.22) | 100 |
| (18.80 - 19.00) | (7.0 - 11.0) |
| (19.47 - 19.67) | (6.0 - 10.0) |
| (22.74 - 22.94) | (10.4 - 16.4) |
| (23.74 - 23.94) | (7.2 - 11.2) |
| (26.45 - 26.65) | (6.3 - 10.3) |
| (31.05 - 31.25) | (8.7 - 14.7) |
wherein 100% relates to the intensity of the maximum peak in the X-ray diffraction pattern.

21. A tectosilicate obtainable by a process according to claim 15 or 16.

22. Use of a layered silicate according to 17 to 20 or a tectosilicate according to claim 21 as a molecular sieve, a catalyst, a catalyst support or binder thereof, an adsorbent, for ion exchange, for the production of ceramics, or in polymers.

## Patentansprüche

1. Verfahren zur Herstellung eines mindestens Silicium und Sauerstoff enthaltenden Schichtsilikats, umfassend
(1) Bereitstellen einer Mischung, die Siliciumdioxid und/oder mindestens eine Siliciumdioxid-Vorstufe, Wasser, mindestens eine Tetraalkylammoniumverbindung ausgewählt aus der Gruppe bestehend aus Diethyldimethylammoniumverbindungen, Triethylmethylammoniumverbindungen und Mischungen von Diethyldimethylammoniumverbindungen und Triethylmethylammoniumverbindungen, und mindestens eine Base und optional mindestens ein geeignetes Kristallisationshilfsmittel enthält;
(2) Erhitzen der gemäß (1) erhaltenen Mischung unter autogenem Druck auf eine Temperatur im Bereich von 120 bis 160°C über einen Zeitraum im Bereich von 5 bis 10 Tagen zum Erhalt einer das Schichtsilikat enthaltenden Suspension,
wobei die gemäß (1) erhaltene Mischung SiO₂ und/oder die Siliciumdioxid-Vorstufe, berechnet als SiO₂, die mindestens eine Tetraalkylammoniumverbindung und Wasser in den Molverhältnissen SiO₂ : Tetraalkylammoniumverbindung : Wasser von 1 : (0,3-0,7) : (9-15) enthält.

2. Verfahren nach Anspruch 1, bei dem die gemäß (1) eingesetzte wässrige Lösung Diethyldimethylammoniumhydroxid, Triethylmethylammoniumhydroxid oder eine Mischung von Diethyldimethylammoniumhydroxid und Triethylmethylammoniumhydroxid, vorzugsweise Diethyldimethylammoniumhydroxid, enthält.

3. Verfahren nach Anspruch 1 oder 2, bei dem die gemäß (1) erhaltene Mischung SiO₂ und/oder die Siliciumdioxid-Vorstufe, berechnet als SiO₂, die mindestens eine Tetraalkylammoniumverbindung und Wasser in den Molverhältnissen SiO₂ : Tetraalkylammoniumverbindung : Wasser von 1 : (0,4-0,6) : (9-15), weiter bevorzugt 1 : (0,45-0,55) : (9-15), enthält.

4. Verfahren nach einem der Ansprüche 1 bis 3, bei dem die gemäß (1) erhaltene Mischung SiO₂ und/oder die Siliciumdioxid-Vorstufe, berechnet als SiO₂, die mindestens eine Tetraalkylammoniumverbindung und Wasser in den Molverhältnissen SiO₂ : Tetraalkylammoniumverbindung : Wasser von 1 : (0,45-0,55) : (9,5-10,5) enthält.

5. Verfahren nach Anspruch 4, bei dem man die Mischung gemäß (2) über einen Zeitraum im Bereich von 8,5 bis 9,5 Tagen erhitzt.

6. Verfahren nach Anspruch 4, bei dem man die Mischung gemäß (2) über einen Zeitraum im Bereich von 5,5 bis 6,5 Tagen erhitzt.

7. Verfahren nach Anspruch 4, bei dem man die Mischung gemäß (2) über einen Zeitraum im Bereich von 6,7 bis 7,5 Tagen erhitzt.

8. Verfahren nach einem der Ansprüche 1 bis 3, bei dem die gemäß (1) erhaltene Mischung SiO₂ und/oder die Siliciumdioxid-Vorstufe, berechnet als SiO₂, die mindestens eine Tetraalkylammoniumverbindung und Wasser in den Molverhältnissen SiO₂ : Tetraalkylammoniumverbindung : Wasser von 1 : (0,45-0,55) : (12,0-13,0) enthält.

9. Verfahren nach Anspruch 8, bei dem man die Mischung gemäß (2) über einen Zeitraum im Bereich von 7,5 bis 8,5 Tagen erhitzt.

10. Verfahren nach einem der Ansprüche 1 bis 9, bei dem man die Mischung gemäß (2) auf eine Temperatur im Bereich von 130 bis 150°C, vorzugsweise 135°C bis 145°C, erhitzt.

11. Verfahren nach einem der Ansprüche 1 bis 10, bei dem man gemäß (1) amorphes Siliciumdioxid einsetzt.

12. Verfahren nach einem der Ansprüche 1 bis 11, bei dem die Mischung gemäß (1) zusätzlich mindestens eine Quelle mindestens eines zur isomorphen Substitution mindestens eines Teils der Si-Atome in dem Schichtsilikat geeigneten Elements enthält, wobei das Element vorzugsweise aus der Gruppe bestehend aus Al, B, Fe, Ti, Sn, Ga, Ge, Zr, V und Nb ausgewählt wird.

13. Verfahren nach einem der Ansprüche 1 bis 12, zusätzlich umfassend
(3) Abtrennen des Silikats aus der gemäß (2) erhaltenen Suspension, und optional ferner umfassend
(4) Waschen des abgetrennten Silikats, vorzugsweise bis zu einem pH-Wert im Bereich von 6,5 bis 7,5, und/oder
(5) Trocknen des abgetrennten und optional gewaschenen Silikats, vorzugsweise bei einer Temperatur im Bereich von 100 bis 150°C.

14. Verfahren nach Anspruch 13, zusätzlich umfassend das Nachbehandeln des abgetrennten und optional gewaschenen und/oder getrockneten Silikats, wodurch mindestens ein Teil der Si-Atome in dem Schichtsilikat durch mindestens ein geeignetes Element isomorph substituiert wird, wobei das Element vorzugsweise aus der Gruppe bestehend aus Al, B, Fe, Ti, Sn, Ga, Ge, Zr, V und Nb ausgewählt wird.

15. Verfahren nach einem der Ansprüche 1 bis 14, zusätzlich umfassend
(6) Calcinieren des gemäß (2) oder (3) oder (4) oder (5) erhaltenen Silikats, vorzugsweise bei einer Temperatur im Bereich von 300 bis 700°C, weiter bevorzugt 300 bis 600°C.

16. Verfahren nach Anspruch 15, zusätzlich umfassend das Nachbehandeln des calcinierten Silikats, wodurch mindestens ein Teil der Si-Atome in dem calcinierten Silikat durch mindestens ein geeignetes Element isomorph substituiert wird, wobei das Element vorzugsweise aus der Gruppe bestehend aus Al, B, Fe, Ti, Sn, Ga, Ge, Zr, V und Nb ausgewählt wird.

17. Schichtsilikat, das nach einem Verfahren gemäß einem der Ansprüche 1 bis 14 erhältlich ist.

18. Schichtsilikat mit einem Röntgenbeugungsmuster, das mindestens die folgenden Reflexe umfasst:
| Beugungswinkel 2 Theta/° [Cu K(alpha 1)] | Intensität (%) |
|---|---|
| (6,09 - 6,29) | (80,0 - 100,0) |
| (7,90 - 8,10) | (80,0 - 100,0) |
| (20,30 - 20,50) | (11,1 - 17,1) |
| (23,95 - 24,15) | (11,9 - 19,9) |
| (24,81 - 25,01) | (16,2 - 26,2) |
| (25,34 - 25,54) | (17,3 - 25,3) |
| (26,56 - 26,76) | (10,4 - 16,4) |
wobei sich die Angabe 100% auf die Intensität des höchsten Peaks im Röntgenbeugungsmuster bezieht.

19. Schichtsilikat mit einem Röntgenbeugungsmuster, das mindestens die folgenden Reflexe umfasst:
| Beugungswinkel 2 Theta/° [Cu K(alpha 1)] | Intensität (%) |
|---|---|
| (5,65 - 5,85) | 100 |
| (18,79 - 18,99) | (14,10 - 22,10) |
| (20,62 - 20,82) | (14,70 - 22,70) |
| (22,06 - 22,26) | (14,30 - 22,30) |
| (22,95 - 23,15) | (17,80 - 27,80) |
| (23,37 - 23,57) | (15,10 - 23,10) |
| (25,93 - 26,13) | (15,20 - 25,20) |
| (31,08 - 31,28) | (14,30 - 22,30) |
wobei sich die Angabe 100% auf die Intensität des höchsten Peaks im Röntgenbeugungsmuster bezieht.

20. Schichtsilikat mit einem Röntgenbeugungsmuster, das mindestens die folgenden Reflexe umfasst:
| Beugungswinkel 2 Theta/° [Cu K(alpha 1)] | Intensität (%) |
|---|---|
| (6,02-6,22) | 100 |
| (18,80 - 19,00) | (7,0 - 11,0) |
| (19,47 - 19,67) | (6,0 - 10,0) |
| (22,74 - 22,94) | (10,4 - 16,4) |
| (23,74 - 23,94) | (7,2 - 11,2) |
| (26,45 - 26,65) | (6,3 - 10,3) |
| (31,05 - 31,25) | (8,7 - 14,7) |
wobei sich die Angabe 100% auf die Intensität des höchsten Peaks im Röntgenbeugungsmuster bezieht.

21. Gerüstsilikat, das nach einem Verfahren gemäß Anspruch 15 oder 16 erhältlich ist.

22. Verwendung eines Schichtsilikats nach einem der Ansprüche 17 bis 20 oder eines Gerüstsilikats nach Anspruch 21 als Molsieb, als Katalysator, als Katalysatorträger oder Bindemittel dafür, als Adsorptionsmittel, zum Ionenaustausch, zur Herstellung von Keramiken oder in Polymeren.

## Revendications

1. Procédé de préparation d'un silicate stratifié contenant au moins du silicium et de l'oxygène, comprenant
(1) la fourniture d'un mélange contenant de la silice et/ou au moins un précurseur de silice, de l'eau, au moins un composé de tétraalkylammonium choisi dans le groupe constitué par les composés de diéthyldiméthylammonium, les composés de triéthylméthylammonium, et des mélanges de composés de diéthyldiméthylammonium et de triéthylméthylammonium, et au moins une base, et optionnellement au moins un matériau d'ensemencement convenable ;
(2) le chauffage du mélange obtenu selon (1) sous pression autogène jusqu'à une température dans la plage allant de 120 à 160°C pendant une période dans la plage allant de 5 à 10 jours pour donner une suspension contenant le silicate stratifié,
où le mélange obtenu selon (1) contient du SiO₂, et/ou le précurseur de silice calculé comme SiO₂, le au moins un composé de tétraalkylammonium, et de l'eau, selon des rapports molaires SiO₂ : composé de tétraalkylammonium : eau de 1 : (0,3-0,7) : (9-15).

2. Procédé selon la revendication 1, dans lequel la solution aqueuse employée selon (1) contient de l'hydroxyde de diéthyldiméthylammonium, de l'hydroxyde de triéthylméthylammonium, ou un mélange d'hydroxyde de diéthyldiméthylammonium et d'hydroxyde de triéthylméthylammonium, préférablement de l'hydroxyde de diéthyldiméthylammonium.

3. Procédé selon la revendication 1 ou 2, où le mélange obtenu selon (1) contient du SiO₂, et/ou le précurseur de silice calculé comme SiO₂, le au moins un composé de tétraalkylammonium, et de l'eau, selon des rapports molaires SiO₂ : composé de tétraalkylammonium : eau de 1 : (0,4-0,6) : (9-15), plus préférablement de 1 : (0,45-0,55) : (9-15).

4. Procédé selon l'une quelconque des revendications 1 à 3, où le mélange obtenu selon (1) contient du SiO₂ et/ou le précurseur de silice calculé comme SiO₂, le au moins un composé de tétraalkylammonium, et de l'eau, selon des rapports molaires SiO₂ : composé de tétraalkylammonium : eau de 1 : (0,45-0,55) : (9,5-10,5).

5. Procédé selon la revendication 4, dans lequel le mélange est chauffé selon (2) pendant une période dans la plage allant de 8,5 à 9,5 jours.

6. Procédé selon la revendication 4, dans lequel le mélange est chauffé selon (2) pendant une période dans la plage allant de 5,5 à 6,5 jours.

7. Procédé selon la revendication 4, dans lequel le mélange est chauffé selon (2) pendant une période dans la plage allant dé 6,7 à 7,5 jours.

8. Procédé selon l'une quelconque des revendications 1 à 3, dans lequel le mélange obtenu selon (1) contient du SiO₂ et/ou le précurseur de silice calculé comme SiO₂, le au moins un composé de tétraalkylammonium, et de l'eau, selon des rapports molaires SiO₂ : composé de tétraalkylammonium : eau de 1 : (0,45-0,55) : (12,0-13, 0) .

9. Procédé selon la revendication 8, dans lequel le mélange est chauffé selon (2) pendant une période dans la plage allant de 7,5 à 8,5 jours.

10. Procédé selon l'une quelconque des revendications 1 à 9, dans lequel le mélange est chauffé selon (2) jusqu'à une température dans la plage allant de 130 à 150°C, préférablement de 135 à 145°C.

11. Procédé selon l'une quelconque des revendications 1 à 10, dans lequel de la silice amorphe est employée selon (1).

12. Procédé selon l'une quelconque des revendications 1 à 11, dans lequel le mélange selon (1) contient en outre au moins une source d'au moins un élément convenable pour une substitution isomorphe d'au moins une portion des atomes de Si dans le silicate stratifié, ledit élément étant choisi de préférence dans le groupe constitué par Al, B, Fe, Ti, Sn, Ga, Ge, Zr, V et Nb.

13. Procédé selon l'une quelconque des revendications 1 à 12, comprenant en outre
(3) la séparation du silicate à partir de la suspension obtenue selon (2), et comprenant en outre optionnellement
(4) le lavage, préférablement jusqu'à un pH dans la plage allant de 6,5 à 7,5, du silicate séparé, et/ou
(5) le séchage, préférablement à une température dans la plage allant de 100 à 150°C, du silicate séparé et optionnellement lavé.

14. Procédé selon la revendication 13, comprenant en outre le post-traitement du silicate séparé et optionnellement lavé et/ou séché, substituant ainsi de manière isomorphe au moins une portion des atomes de Si dans le silicate stratifié par au moins un élément convenable, ledit élément étant choisi de préférence dans le groupe constitué par Al, B, Fe, Ti, Sn, Ga, Ge, Zr, V et Nb.

15. Procédé selon l'une quelconque des revendications 1 à 14, comprenant en outre
(6) la calcination du silicate obtenu selon (2) ou (3) ou (4) ou (5), préférablement à une température dans la plage allant de 300 à 700°C, plus préférablement de 300 à 600°C.

16. Procédé selon la revendication 15, comprenant en outre le post-traitement du silicate calciné, substituant ainsi de manière isomorphe Si dans le silicate calciné par au moins un élément convenable, ledit élément étant choisi de préférence dans le groupe constitué par Al, B, Fe, Ti, Sn, Ga, Ge, Zr, V et Nb.

17. Silicate stratifié pouvant être obtenu par un procédé selon l'une quelconque des revendications 1 à 14.

18. Silicate stratifié présentant un diagramme de diffraction des rayons X comprenant au moins les réflexions suivantes :
| Angle de diffraction 2 Thêta/° [Cu K(alpha 1)] | Intensité (%) |
|---|---|
| (6,09 - 6,29) | (80,0 - 100,0) |
| (7,90 - 8,10) | (80,0 - 100,0) |
| (20,30 - 20,50) | (11,1 - 17,1) |
| (23,95 - 24,15) | (11,9 - 19,9) |
| (24,81 - 25,01) | (16,2 - 26,2) |
| (25,34 - 25,54) | (17,3 - 25,3) |
| (26,56 - 26,76) | (10,4 - 16,4) |
où 100% se rapporte à l'intensité du pic maximum dans le diagramme de diffraction des rayons X.

19. Silicate stratifié présentant un diagramme de diffraction des rayons X comprenant au moins les réflexions suivantes :
| Angle de diffraction 2 Thêta/° [Cu K(alpha 1)] | Intensité (%) |
|---|---|
| (5,65 - 5,85) | 100 |
| (18,79 - 18,99) | (14,10 - 22,10) |
| (20,62 - 20,82) | (14,70 - 22,70) |
| (22,06 - 22,26) | (14,30 - 22,30) |
| (22,95 - 23,15) | (17,80 - 27,80) |
| (23,37 - 23,57) | (15,10 - 23,10) |
| (25,93 - 26,13) | (15,20 - 25,20) |
| (31,08 - 31,28) | (14,30 - 22,30) |
où 100% se rapporte à l'intensité du pic maximum dans le diagramme de diffraction des rayons X.

20. Silicate stratifié présentant un diagramme de diffraction des rayons X comprenant au moins les réflexions suivantes :
| Angle de diffraction 2 Thêta/° [Cu K(alpha 1)] | Intensité (%) |
|---|---|
| (6,02 - 6,22) | 100 |
| (18,80 - 19,00) | (7,0 - 11,0) |
| (19,47 - 19,67) | (6,0 - 10,0) |
| (22,74 - 22,94) | (10,4 - 16,4) |
| (23,74 - 23,94) | (7,2 - 11,2) |
| (26,45 - 26,65) | (6,3 - 10,3) |
| (31,05 - 31,25) | (8,7 - 14,7) |
où 100% se rapporte à l'intensité du pic maximum dans le diagramme de diffraction des rayons X.

21. Tectosilicate pouvant être obtenu par un procédé selon la revendication 15 ou 16.

22. Utilisation d'un silicate stratifié selon l'une quelconque des revendications 17 à 20 ou d'un tectosilicate selon la revendication 21, comme tamis moléculaires, catalyseur, support de catalyseur ou liant pour celui-ci, adsorbant, pour l'échange d'ions, pour la production de céramiques, ou dans des polymères.
